# FASCICULE DE BREVET EUROPEEN

(11) **EP 0 480 111 B1**
(45) Date de publication et mention de la délivrance du brevet: **09.11.1994**
(21) Numéro de dépôt: 90402824.8
(22) Date de dépôt: 10.10.1990
(51) Int. Cl.: B65B 61/18, B31B 1/84

(54) **Conteneur en carton plastifié avec bec-verseur soudé et son procédé de fabrication**
Mit Kunststoff kaschierte Pappschachtel mit angeschweisster Ausgiesstülle und Verfahren zu ihrer Herstellung
Plastified carton with sealed dispensing spout and method for its manufacture

(43) Date de publication de la demande: 15.04.1992
(73) Titulaire: VINIPAK, NL-6503 AD Nijmegen (NL)
(72) Inventeur: Dordonnat, Christian, F-78730 St.Arnoult-en-Yvelines (FR); Scalbert, Jean, F-59150 Wattrelos (FR)
(74) Mandataire: Casalonga, Axel

(56) Documents cités:
- FR-A- 2 645 503
- US-A- 4 788 811

## Description

L'invention concerne les conteneurs à liquide formés à partir d'une feuille de carton ou similaire, éventuellement doublée d'une feuille d'aluminium, et plastifiée au moins sur sa face intérieure pour permettre la réalisation de soudures étanches, ces conteneurs ayant une forme générale parallélépipédique refermée vers le haut après remplissage par soudure et pliage d'un type approprié.

Pour faciliter l'ouverture de ces conteneurs, il est connu d'y pratiquer à l'avance un trou operculé dans leur partie supérieure, mais dans ce cas pour éviter l'infiltration du liquide par la tranche du carton il est en général nécessaire que l'opercule, en plastique ou en aluminium, soit soudé contre la face intérieure du conteneur, cet opercule étant destiné à être transpercé ensuite à l'aide d'un instrument quelconque ou d'un embout spécial à partie intérieure coulissante assurant le percement de cet opercule, comme décrit par exemple dans le brevet US n° 4 483 464. Toutefois une telle réalisation est relativement complexe par le fait qu'elle nécessite une soudure d'opercule à l'intérieur de l'emballage, qu'elle nécessite en outre l'utilisation d'un carton plastifié également sur sa face extérieure pour la soudure de la partie fixe de l'embout, et qu'elle nécessite enfin une partie intérieure mobile de déchirage en plus de la partie fixe et du capuchon de refermeture de cet embout.

Par ailleurs, il est connu par le brevet US n° 4 788 811 d'introduire et de fixer un bec verseur dans un orifice d'un conteneur en carton plastifié, ledit bec comprenant à son extrémité intérieure une collerette extérieure dépassant la section du bec et étant introduit de l'intérieur du conteneur dans ledit orifice pour que sa collerette puisse être soudée à la paroi du conteneur. Le dispositif d'introduction et de fixation proposé par ce brevet est cependant relativement compliqué.

Le but de l'invention est de proposer un dispositif plus simple pour introduire et fixer un bec verseur dans un orifice d'un conteneur en carton plastifié.

Le dispositif conforme à l'invention comprend :
- un mandrin monté mobile en translation suivant l'axe du conteneur 1 de manière à pouvoir être introduit axialement dans le conteneur, par l'extrémité encore ouverte de ce dernier,
- une coulisse montée mobile dans ledit mandrin,
- un porte-bec monté mobile sur ladite coulisse, et
- des moyens prévus sur ledit mandrin, ladite coulisse et ledit porte-bec pour imprimer au porte-bec un mouvement perpendiculaire à l'axe du mandrin en réponse à un mouvement axial de la coulisse selon l'axe du conteneur.

Suivant un mode de réalisation préféré de l'invention, la coulisse est une coulisse à double déplacement, parallèle puis oblique par rapport à l'axe du conteneur, et ledit porte-bec est assujetti à un mouvement parallèle à l'axe du conteneur limité d'une part par rapport à ladite coulisse, et d'autre part par rapport au mandrin par une butée de manière à effectuer un mouvement perpendiculaire à l'axe du conteneur en réponse audit déplacement oblique de ladite coulisse.

Sur le côté extérieur du récipient et à la hauteur de l'orifice on prévoit une contre-pièce fixe ou mobile comportant les moyens de chauffage et de pression pour assurer la soudure, par effet thermique, par ultrason ou par haute fréquence.

En variante le bec verseur peut comprendre un renflement à sa base destiné à être déformé vers l'extérieur par la contre-pièce de soudure afin de réaliser la soudure également sur la face extérieure du conteneur.

D'autres particularités de l'invention appraîtront dans la description qui va suivre d'un mode de réalisation pris comme exemple et représenté sur le dessin annexé sur lequel :
la figure 1 est une coupe axiale partielle d'un mode de réalisation du dispositif conforme à l'invention, avant exécution du deuxième mouvement de la coulisse;
la figure 2 est une vue correspondante après ce deuxième mouvement;
la figure 3 est une coupe selon III-III de la figure 1; et
les figures 4 et 5 sont des coupes partielles à plus grande échelle d'une variante de réalisation du bec verseur, respectivement avant et après exécution de la soudure.

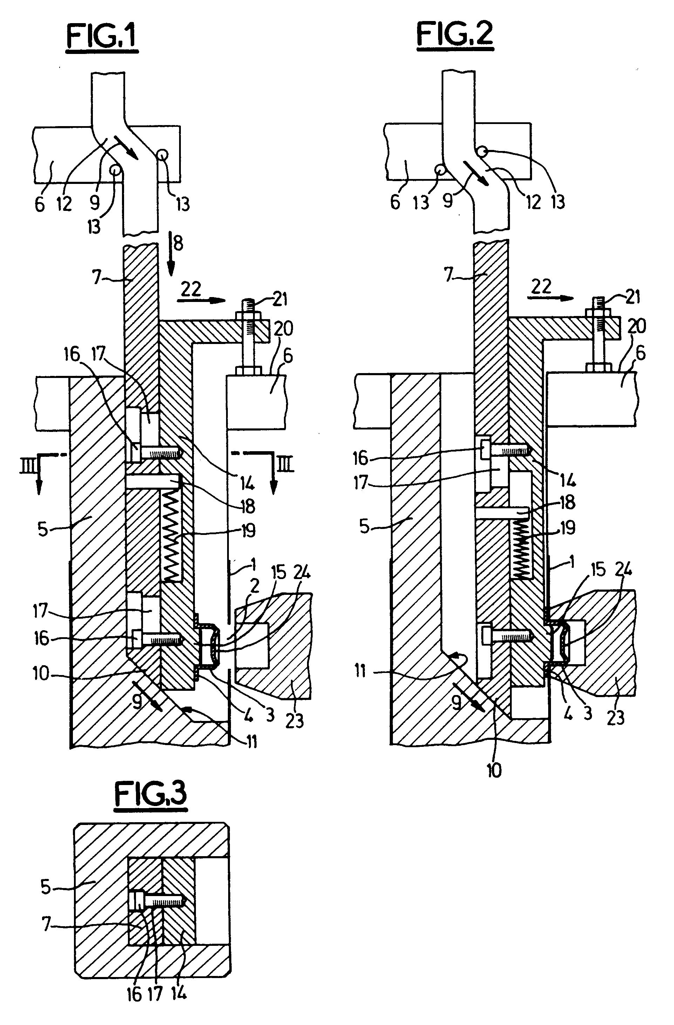

On voit sur la figure 1 la partie supérieure du conteneur 1, muni de l'orifice 2 dans lequel va être introduit le bec verseur 3 dont la section correspond à celle du trou 2, et qui est muni à son extrémité située du côté intérieur du conteneur d'une collerette 4 dépassant au-delà de la section de la partie 3 pour venir s'appliquer sur la face intérieure plastifiée de la paroi du conteneur 1.

Pour cela on utilise un mandrin 5 d'une section appropriée pour pouvoir être introduite dans la partie supérieure du conteneur, ce mandrin 5 étant solidaire d'un porte-mandrin 6 susceptible d'être déplacé selon l'axe du mandrin pour assurer cette introduction dans le conteneur.

Dans ce mandrin 5 et ce porte-mandrin 6 est montée une coulisse 7 à double déplacement susceptible de se déplacer dans un premier mouvement de translation dans le sens axial représenté par la flèche 8 sur la figure 1, et dans un deuxième mouvement de se déplacer d'un mouvement de translation oblique représenté par les flèches 9 sur les figures 1 et 2. Ce dernier mouvement peut par exemple être assuré à l'extrémité inférieure de la coulisse 7 par glissement de son extrémité inférieure oblique 10 sur une face oblique correspondante 11 usinée à l'intérieur du mandrin 5, et à la partie supérieure par coulissement d'une partie coudée 12 de la coulisse 7 entre deux plots de guidage 13, ou par tout autre moyen mécanique approprié.

Sur cette coulisse 7 est monté un porte-bec 14 comportant une saillie 15 de centrage du bec 3, ce porte-bec étant assujetti à coulisser axialement par rapport à la coulisse 7 tout en restant en contact avec celle-ci. Ceci est obtenu par exemple à l'aide de vis de retenue 16 coulissant dans des lumières appropriées 17 de la coulisse 7. En outre un doigt 18, porté par exemple par la coulisse 7, vient comprimer un ressort 19 situé dans un logement correspondant du porte-bec 14, afin de solliciter constamment le porte-bec 14 en direction du bas de sa course limitée par les lumières 17.

Par ailleurs le porte-bec 14 est agencé pour pouvoir se déplacer librement dans le sens 8 lors du premier mouvement, puis être arrêté par une face 20 du mandrin ou du porte-mandrin 6 perpendiculaire à l'axe du mandrin, au moyen d'une butée 21 réglable, de telle manière que le seul mouvement autorisé du porte-bec 14 par rapport au porte-mandrin 6 dans la deuxième phase du mouvement soit un déplacement dans le sens 22 perpendiculaire à l'axe du mandrin, mouvement nécessaire pour assurer l'introduction du bec 3 dans l'orifice 2.

A la fin du deuxième mouvement, comme représenté sur la figure 2, la collerette 4 du bec 3 est venue au contact de la paroi intérieure plastifiée du conteneur 1. C'est dans cette position qu'elle soudée au moyen par exemple d'une sonotrode 23 qui vient s'emboîter sur la partie extérieure 3 du bec et vient au contact de la paroi du conteneur alentour du trou 2 pour presser, chauffer et souder à la fois le carton plastifié et la collerette 4 contre la face du porte-bec qui résiste à cette pression grâce aux surfaces de guidage 11 et 13. La sonotrode 23, destinée à la transmission d'ultrasons de manière connue, peut être mobile d'une manière habituelle ou éventuellement rester fixe sur la machine tout en permettant le déplacement des conteneurs 1 successifs dans le sens horizontal perpendiculaire aux plans des figures 1 et 2, l'application de la pression nécessaire à la soudure étant alors assurée par le mouvement 22 exposé précédemment.

Après exécution de cette soudure, le mouvement inverse extrait le porte-bec dans le sens opposé à la flèche 22, puis la coulisse munie du porte-bec dans le sens opposé à la flèche 8 jusqu'à une position supérieure non représentée où un nouveau bec 3 peut être mis en place sur la saillie 15 pour l'opération suivante.

L'ensemble de la pose est donc extrêmement simple et facilement automatisable. Elle peut avoir lieu sur la machine de fabrication des conteneurs avant remplissage, le mandrin 5 pouvant par exemple en même temps servir de mandrin pour la fermeture du fond inférieur, ou au contraire être effectué après remplissage, le mandrin 5 ayant alors une longueur limitée pour venir se placer au-dessus du liquide dans le conteneur, et venant se situer entre le poste de remplissage et le poste de soudure de l'extrémité supérieure du conteneur.

La soudure directe de la collerette 4 sur la face intérieure plastifiée du conteneur 1 assure une étanchéité parfaite du bec 1, dont la configuration extérieure peut être agencée de manière appropriée pour assurer une fermeture étanche, par exemple en le munissant d'une manière connue d'un opercule déchirable 24, et éventuellement d'un capuchon de refermeture après utilisation.

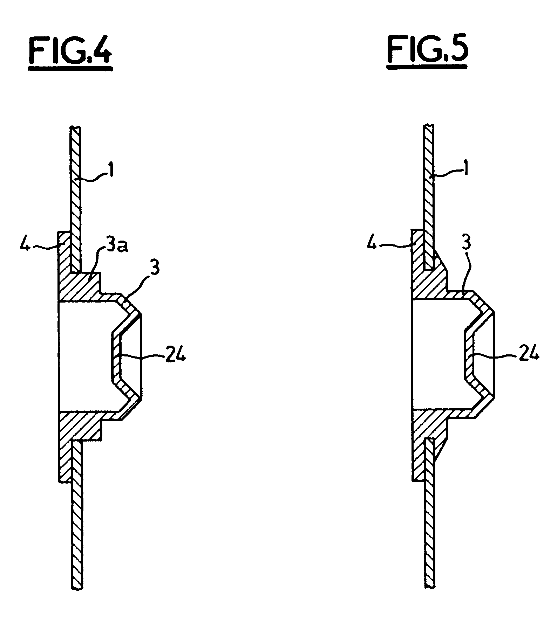

Par ailleurs cette soudure intérieure garantit l'impossibilité au liquide contenu dans le conteneur de venir s'infiltrer par la tranche du carton dans l'orifice 2. Toutefois un tel risque subsiste vis-à-vis des projections de liquide en provenance de l'extérieur. Pour y remédier on peut utiliser un carton dont la surface extérieure est également plastifiée, et modifier le bec-verseur à la manière représentée sur les figures 4 et 5. Dans cette variante on prévoit un bourrelet 3a dont le diamètre extérieur correspond au diamètre du trou 2, et situé à la base de la partie 3 dont le diamètre extérieur correspond au diamètre intérieur de la sonotrode 23. Par ailleurs le bourrelet 3a présente une dimension dans le sens axial supérieure à l'épaisseur du carton du conteneur 1. De cette manière lors des opérations de soudure qui précèdent, ce bourrelet 3a se trouve écrasé et déformé vers l'extérieur comme représenté sur la figure 5 pour venir de souder également sur la couche extérieure plastifiée du carton 1, l'extrémité de la sonotrode 23 étant alors conformée en conséquence pour former une bouterolle.

## Revendications

1. Dispositif pour l'introduction et la fixation d'un bec verseur (3) dans un orifice (2) d'un conteneur (1) en carton plastifié, ledit bec (3) comprenant à son extrémité intérieure une collerette (4) extérieure dépassant la section du bec et étant introduit de l'intérieur du conteneur (1) dans ledit orifice (2) pour que sa collerette (4) puisse être soudée à la paroi du conteneur (1), caractérisé par le fait qu'il comprend :
- un mandrin (5) monté mobile en translation suivant l'axe du conteneur (1) de manière à pouvoir être introduit axialement dans le conteneur, par l'extrémité encore ouverte de ce dernier,
- une coulisse (7) montée mobile dans ledit mandrin,
- un porte-bec (14) monté mobile sur ladite coulisse, et
- des moyens (10, 11, 13, 20, 21) prévus sur ledit mandrin, ladite coulisse et ledit porte-bec pour imprimer au porte-bec un mouvement perpendiculaire à l'axe du mandrin (5) en réponse à un mouvement axial de la coulisse selon l'axe du conteneur (1).

2. Dispositif suivant la revendication 1, caractérisé par le fait que ladite coulisse (7) est une coulisse à double déplacement, parallèle puis oblique par rapport à l'axe du conteneur (1), et que ledit porte-bec (14) est assujetti à un mouvement parallèle à l'axe du conteneur (1) limité d'une part par rapport à ladite coulisse (7), et d'autre part par rapport au mandrin (5) par une butée (21) de manière à effectuer un mouvement perpendiculaire à l'axe du conteneur (1) en réponse audit déplacement oblique de ladite coulisse.

3. Dispositif suivant la revendication 1, caractérisé par le fait qu'il comprend, en outre, à l'extérieur du conteneur, une sonotrode (23) fixe, la pression de soudage étant produite par la fin du mouvement (22) du porte-bec perpendiculairement à l'axe du mandrin.

## Claims

1. Device for introducing and fixing a dispensing spout (3) in an orifice (2) of a container (1) made of plastified carton, the dispensing spout (3) comprising at its inner end an outer flange (4) projecting from the section of the spout and being introduced from the interior of the container (1) in the orifice (2) so that its flange (4) can be welded to the wall of the container (1), **characterised** in that it comprises:
- a mandrel (5) mounted movable in translation along the axis of the container (1) so that it can be introduced axially into the container through the end thereof being still open,
- a slider (7) mounted movable in the mandrel,
- a spout support (14) mounted movable on the slider and
- means (10, 11, 13, 20, 21) provided on the mandrel, the slider and the spout support for moving the spout support perpendicularly to the axis of the mandrel (5) in reaction to an axial movement of the slider in accordance with the axis of the container (1).

2. Device according to claim 1, **characterised** in that the slider (7) is a slider with double displacement, parallel, then sloped with relation to the axis of the container (1) and that the spout support (14) is subjected to a movement parallel to the axis of the container (1) limited on the one hand with relation to the slider (7) and on the other hand with relation to the mandrel (5) by a stopper (21) in such a manner that a movement perpendicular to the axis of the container (1) is effected in reaction to the sloped displacement of the slider.

3. Device in accordance with claim 1, **characterised** in that it further comprises at the outside of the container a fixed sonotrode (23), the welding pressure being produced by the end of the movement (22) of the spout support perpendicularly to the axis of the mandrel.

## Patentansprüche

1. Vorrichtung zur Einführung und Befestigung einer Ausgießtülle (3) in einer Öffnung (2) eines Behälters (1) aus kunststoffüberzogenem Pappkarton, wobei die Tülle (3) an ihrem unteren Ende einen Außenflansch (4) umfaßt, der über den Querschnitt der Tülle vorsteht und in den Innenraum des Behälters (1) in der Öffnung (2) eingeführt wird, damit sein Flansch (4) an die Wand des Behälters (1) geschweißt werden kann, dadurch **gekennzeichnet**, daß sie umfaßt:
- einen Haltedorn (5), der beweglich in Translation längs der Achse des Behälters (1) angebracht ist, derart, daß er axial in den Behälter durch das noch offene Ende des letzteren eingeführt werden kann,
- einen im Haltedorn beweglich angebrachten Schieber (7),
- einen beweglich auf dem Schieber angebrachten Tüllenträger (14) und
- auf dem Haltedorn, dem Schieber und dem Tüllenträger vorgesehene Mittel (10, 11, 13, 20, 21), um den Tüllenträger senkrecht zur Achse des Haltedorns (5) in Reaktion auf eine axiale Bewegung des Schiebers längs der Achse des Behälters (1) zu bewegen.

2. Vorrichtung nach Anspruch 1, dadurch **gekennzeichnet**, daß der Schieber (7) ein Schieber mit Doppelverschiebung, parallel, dann schräg in bezug auf die Achse des Behälters (1), ist und daß der Tüllenträger (14) einer zur Achse des Behälters (1) parallelen Bewegung unterworfen wird, die einerseits in bezug auf den Schieber (7) und andererseits in bezug auf den Haltedorn (5) durch einen Anschlag (21) begrenzt ist, derart, daß eine Bewegung senkrecht zur Achse des Behälters (1) in Reaktion auf die schräge Verschiebung des Schiebers ausgeführt wird.

3. Vorrichtung nach Anspruch 1, dadurch **gekennzeichnet**, daß sie außerdem auf der Außenseite des Behälters eine feste Sonotrode (23) umfaßt, wobei der Schweißdruck durch das Ende der Bewegung (22) des Tüllenträgers senkrecht zur Achse des Haltedorns erzeugt wird.
